(19) Europäisches Patentamt
European Patent Office
Office européen des brevets

(11) EP 3 454 163 B1

(12) EUROPEAN PATENT SPECIFICATION

(45) Date of publication and mention
of the grant of the patent:
**08.07.2020 Bulletin 2020/28**

(51) Int Cl.:
**G05D 16/20** (2006.01)          **F04D 27/00** (2006.01)
**G05B 11/32** (2006.01)

(21) Application number: **18192578.5**

(22) Date of filing: **04.09.2018**

(54) **CONTROL SYSTEM FOR A COMPRESSOR WITH PRESSURE-BASED SUBSYSTEM, SYNTHESIS PLANT AND CONTROL METHOD**

STEUERUNGSSYSTEM FÜR EINEN VERDICHTER MIT DRUCKBASIERTEM UNTERSYSTEM, SYNTHESEANLAGE UND STEUERUNGSVERFAHREN

SYSTÈME DE COMMANDE POUR COMPRESSEUR À SOUS-SYSTÈME BASÉ SUR LA PRESSION, INSTALLATION DE SYNTHÈSE ET PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2017 IT 201700100704**

(43) Date of publication of application:
**13.03.2019 Bulletin 2019/11**

(73) Proprietor: **Nuovo Pignone Tecnologie - S.r.l.**
**50127 Florence (IT)**

(72) Inventors:
 • **CALOSI, Mirco**
  **50127 Florence (IT)**
 • **SIGNORINI, Annamaria**
  **50127 Florence (IT)**
 • **PASQUOTTI, Maura**
  **50127 Florence (IT)**
 • **MOSCATELLI, Pasquale Gianluca**
  **50127 Florence (IT)**
 • **RIZZELLI, Marco**
  **50127 Florence (IT)**
 • **PELELLA, Marco**
  **50127 Florence (IT)**

(74) Representative: **BRP Renaud & Partner mbB**
**Rechtsanwälte Patentanwälte**
**Steuerberater et al**
**Königstraße 28**
**70173 Stuttgart (DE)**

(56) References cited:
 **US-A- 3 979 655     US-A- 4 218 191**

## Description

### TECHNICAL FIELD

Embodiments of the subject matter disclosed herein correspond to control systems for a rotary compressor driven by a rotary engine, synthesis plants and control methods.

### BACKGROUND ART

Trains comprising a compressor driven by an engine are quite common, in particular in the field of "Oil & Gas".

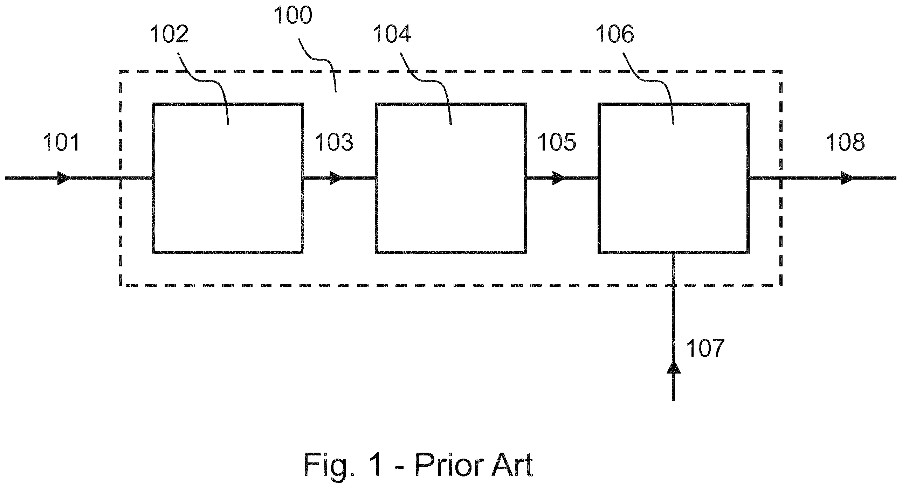

A typical control system for such trains, such as system 100 shown in annexed Fig. 1, determines (block 102) a load demand 103 based on a (detected) suction pressure 101 of the compressor, then determines (block 104) a speed setpoint 105 based on the previously-determined load demand 103, and finally determines (block 106) a control signal 108 based on the previously-determined speed setpoint 105 and a (detected) rotation speed 107 of the compressor; the so-determined control signal 108 is fed to a control input of the engine. A control system of this type is disclosed, for example, in US patent n° 3,979,655.

Such typical control system works well if the effects of disturbances coming from units upstream or downstream the compressor or the effects of interactions between the compressor and said units, on compressor speed and/or on controlled performance variables are consistent; this applies, for example, if the composition of the gas mixture at the inlet of the compressor remains absolutely constant or, at least, quite constant.

The above-mentioned trains are used, for example, in synthesis plant for the production of ammonia. An example of a known process for producing ammonia is the one that may be licensed from KBR that will be called in the following "KBR process".

In a synthesis plant, for example, there are units upstream the compressor arranged to prepare a gas mixture (often containing hydrogen and/or nitrogen and/or carbon monoxide) to be processed by the compressor. Although the plant is designed so to maintain the composition of the gas mixture constant, one or more of these units may adversely affect the composition in certain operating conditions. For example, in an ammonia plant implementing the "KBR process", there is a so-called "purifier" (including a condensation reformer) upstream the compressor system (including two compressors) that may cause variations in the composition of the gas mixture.

In such synthesis plants, due to a (substantial) variation in the composition of the gas mixture and a consequential (substantial) variation in the rotation speed of the compressor, a typical control system implements a control action in the opposite direction to reject the disturbance. For this reason, the control system has to be switched from "automatic mode" or "automatic control" to "manual mode" or "manual control" in order to avoid amplifying the upset and reaching an unstable condition; after some time, the control system is switched back to "automatic mode" or "automatic control". This means that the control system is semiautomatic.

It would be desirable to have a full-automatic control system that adjusts a rotational speed of a compressor to compensate for variations in the composition of a gas mixture at an inlet of the compressor.

### SUMMARY

First embodiments of the subject matter disclosed herein relate to a control system for a rotary compressor driven by a rotary engine.

According to such first embodiments, a control system for a rotary compressor driven by a rotary engine, comprises: a first control subsystem, a second control subsystem and a selector; the first control subsystem comprises: a performance input arranged to receive a first measure signal indicating performance of said rotary compressor, a speed input arranged to receive a second measure signal indicating rotation speed of said rotary compressor or said rotary engine, and a first control output arranged to provide a first control signal as a function of said first measure signal and said second measure signal; the second control subsystem comprises: a performance input arranged to receive a third measure signal indicating performance of said rotary compressor, and a second control output arranged to provide a second control signal as a function of said third measure signal; the selector comprises: a first input electrically connected to said first control output, a second input electrically connected to said second control output, and a third control output arranged to provide a third control signal to a power control input of said rotary engine; said selector is arranged to select said first control signal or said second control signal as said third control signal to be provided at said third control output.

Second embodiments of the subject matter disclosed herein relate to a synthesis plant.

According to such second embodiments, the synthesis plant comprises: a rotary compressor comprising an inlet and an outlet, wherein said inlet is arranged to receive a gas mixture, a rotary engine driving said rotary compressor, and a control system as set out above.

Third embodiments of the subject matter disclosed herein relate to a method of controlling a rotary compressor driven by a rotary engine.

According to such third embodiments, the method comprising the steps of: measuring a parameter of said rotary compressor, said parameter indicating performance of said rotary compressor, measuring a rotation speed of said rotary compressor or said rotary engine, generating a first control signal as a function of said parameter and said rotation speed, generating a second control signal as a function of said parameter, generating a third control signal by selecting between said first control signal and said second control signal, and providing said third control signal to control input terminals of said rotary engine.

BRIEF DESCRIPTION OF DRAWINGS

The accompanying drawings, which are incorporated herein and constitute an integral part of the present specification, illustrate exemplary embodiments of the present invention and, together with the detailed description, explain these embodiments. In the drawings:

Fig. 1 shows a block diagram of a control system according to the prior art,

Fig. 2 shows a general block diagram applicable to several embodiments of a control system,

Fig. 3 shows a general block diagram applicable to several embodiments of a synthesis plant,

Fig. 4 shows a detailed block diagram of a first embodiment of a control system,

Fig. 5 shows a detailed block diagram of a second embodiment of a control system, and

Fig. 6 shows a flow chart of an embodiment of a control method.

DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In the following, embodiments of the subject matter disclosed herein will be described through block diagrams made of blocks connected by lines entering into and exiting out of blocks as it is customary practice in the field of "control theory".

It is to be noted that such block diagrams may be implemented in many different ways through various possible combinations of pieces of hardware and pieces of software.

Therefore, throughout the specification (i.e. description, claims and abstract) and drawings, a "block" may refer to a piece of hardware or piece of software (running on a piece of hardware), an "input" or an "output" may refer to electrical terminals or a piece of data stored in a computer memory (that may be for example internal to a PLC), the expression "receiving a signal" may mean "letting an electrical signal flow into electrical terminals" or "reading a piece of data from a memory", the expression "providing an output" may mean "letting an electrical signal flow out of electrical terminals" or "writing a piece of data to a memory", the expression "electrically connected" (when referred for example to blocks) may correspond to having electrical wires between electrical terminals of a block and electrical terminals of another block or to having a block writing a piece of data to a memory and another block reading the same piece of data from the same memory.

According to a typical implementation, a new and inventive fully-automatic control system may be implemented for example through a single PLC (= Programmable Logic Controller) and one or more pieces of software; in this case, in particular, a block may correspond to a piece of software, i.e. a software program or a software subroutine.

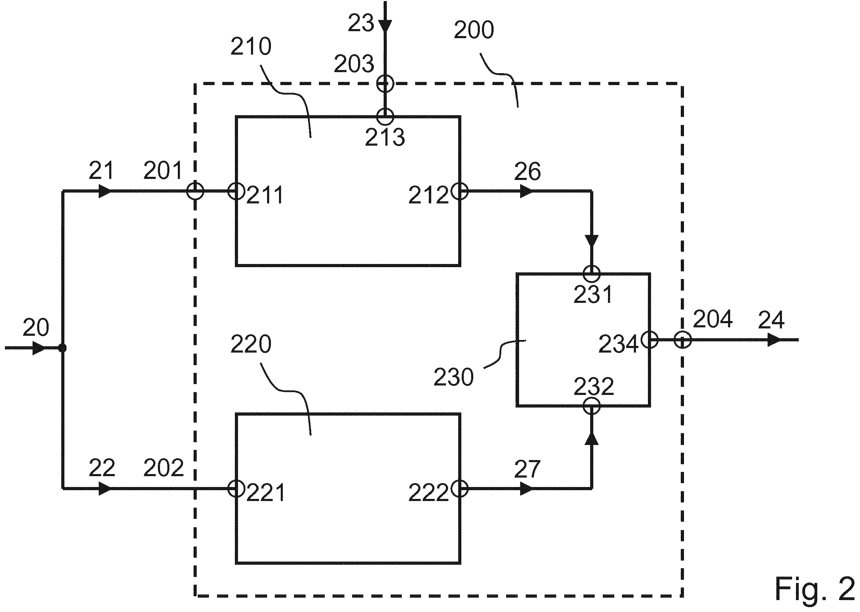

Figures 2, 3, 4, and 5 illustrate embodiments of a new and inventive fully-automatic control system that adjusts rotational speed of a compressor in response to disturbances, such as, but not limited to, variations in the composition of a gas mixture at an inlet of the compressor. The gas mixture may comprise so-called "synthesis gas" that often contains hydrogen and/or nitrogen and/or carbon monoxide. The control system together with a controlled train, including a rotary compressor and an engine, may be used within a plant to synthesize ammonia from the gas mixture. The rotary compressor may be driven by the engine.

The new full-automatic control system differs from prior control systems in that it includes not one, but at least two control subsystems. The first control subsystem performs control based preferably only on a performance parameter of the compressor, in particular its suction pressure, and the rotation speed of the engine or the compressor. The second control subsystem performs control based preferably only on a performance parameter of the compressor, in particular its suction pressure. The second control subsystem is used for example when the suction pressure of the compressor is very high (i.e. much higher than expected from design) and/or when the suction pressure of the compressor is varying very quickly (i.e. much quicker than expected from design); this means for example that the composition of the gas mixture at the inlet of the compressor is far from expected; otherwise the first control subsystem is used. Therefore, no human intervention is necessary.

Referring to Fig. 2, a new control system 200 is arranged to control a rotary compressor driven by a rotary engine.

Control system 200 may include: a first control subsystem 210, a second control subsystem 220 and a selector 230.

It is to be noted that a control subsystem may be implemented in many different ways through various possible combinations of pieces of hardware and pieces of software. If the control system is implemented for example through a single PLC, each or any of the control subsystems may be implemented through a so-called "software module", i.e. a set of software programs or software subroutines cooperating for a specific purpose, running on the PLC.

Control system 200 has a first input 201, a second input 202, a third input 203 and an output 204.

First control subsystem 210 comprises: a performance input 211 arranged to receive a first measure signal 21 indicating performance of the rotary compressor, a speed input 213 arranged to receive a second measure signal 23 indicating rotation speed of the rotary compressor or the rotary engine (usually the two rotation speeds are equal or at a fixed ratio), and a first control output 212 arranged to provide a first control signal 26 as a function of signal 21 and signal 23. Typically, first measure signal 21 indicates suction pressure of the rotary compressor; alternatively, it indicates another performance variable of the compressor such as, for example, discharge pressure of the compressor or net gas (mass or volumetric) flow rate processed by the compressor. Typically, control signal 26 is a power control signal, in particular a speed control signal (in case there is a direct relation between speed and power generated by the engine). Typically, the first control signal 26 is a function of only signals 21 and 23 (but also of other parameters and constants).

Second control subsystem 220 comprises: a performance input 221 arranged to receive a third measure signal 22 indicating performance of the rotary compressor, and a second control output 222 arranged to provide a second control signal 27 as a function of signal 22. Typically, first measure signal 22 indicates suction pressure of the rotary compressor; alternatively, it indicates another performance variable of the compressor such as, for example, discharge pressure of the compressor or net gas (mass or volumetric) flow rate processed by the compressor. Typically, control signal 27 is a power control signal, in particular a speed control signal (in case there is a direct relation between speed and power generated by the engine). Typically, the second control signal 27 is a function of only signal 22 (but also of other parameters and constants).

In the following, the suction pressure of the compressor will be considered the performance variable of the compressor without limiting the generality of the foregoing.

In the embodiment of Fig. 2, signal 21 and signal 22 correspond to the same signal 20 indicating suction pressure of the rotary compressor.

Selector 230 comprises: a first input 231 electrically connected to the first control output 212, a second input 232 electrically connected to the second control output 222, and a third control output 234 arranged to provide a third control signal 24 to a control input of the rotary engine.

Typically, control signal 24 is a power control signal, in particular a speed control signal (in case there is a direct relation between speed and power generated by the engine). For example, if the engine is a steam turbine, control signal 24 may be a signal indicating the opening degree of its steam valve; more in particular, it is the opening percentage of this valve.

Selector 230 is arranged to select control signal 26 or control signal 27 as control signal 24 to be provided at control output 234.

Input 211 is electrically connected to input 201 of control system 200; input 221 is electrically connected to input 202 of control system 200; input 213 is electrically connected to input 203 of control system 200; output 234 is electrically connected to out 204 of control system 200.

Selector 230 may carry out selection of input signal coming from the second control subsystem (instead of the input signal coming the first control subsystem) according to one or more predetermined selection criteria, for example one or more of at least the following criteria:

A) an absolute value of a difference between suction pressure measure signal 21 and a suction pressure setpoint exceeds a first threshold value,

B) an absolute value of a derivative of a difference between suction pressure measure signal 21 and a suction pressure setpoint exceeds a second threshold value.

Criterion A means that the suction pressure of the compressor is very high.

Criterion B means that the suction pressure of the compressor is varying very quickly.

Additional selection criteria that lead selector 230 selecting the input signal coming from the first control subsystem (instead of the input signal coming the second control subsystem) may be for example one or more of at least the following criteria:

C) rotation speed of the engine and/or the compressor is lower than a low limit,

D) rotation speed of the engine and/or the compressor is higher than a high limit,

E) the first control subsystem is contributing to anti-surge control.

It is to be noted that the low limit and/or the high limit is advantageously not a predetermined value. For example, given a current rotation speed, the low limit may be the current speed with a subtracted percentage of e.g.

1 or 3 or 10 % and the high limit may be the current speed with an added percentage of e.g. 1 or 3 or 10 %; the subtracted percentage and the added percentage may be different between each other; the subtracted percentage and/or the added percentage may depend on e.g. the current speed.

Second control subsystem 220 may comprise or correspond to a PID controller arranged to determine control signal 27 based only on suction pressure signal 22 (but also of other parameters and constants); preferably only the P term and the I term are used, and, in this case, the controller may be defined a PI controller.

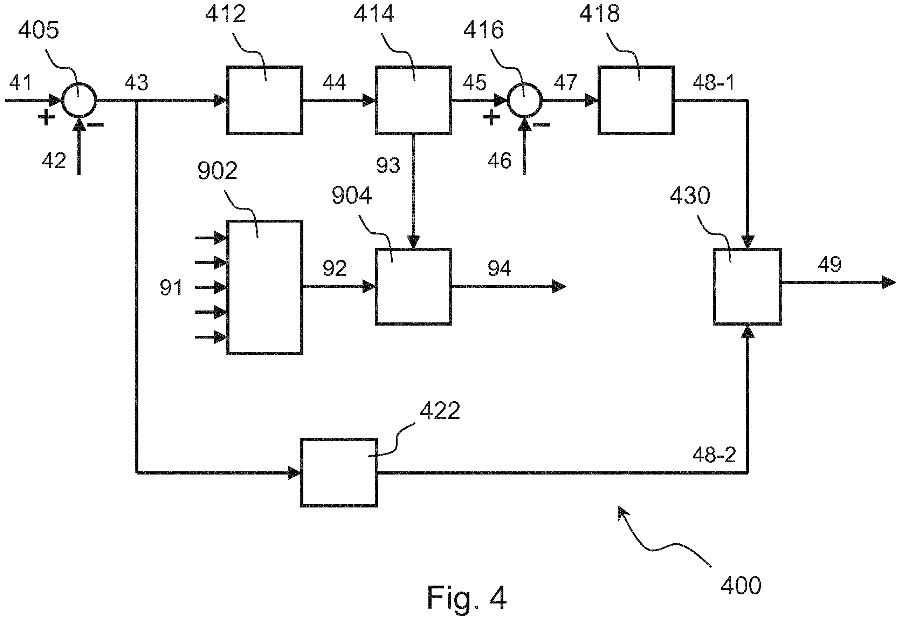

The embodiment of Fig. 4, i.e. control system 400, will now be considered.

Control system 400 comprises a first control subsystem, a second control subsystem and a selector. The first control subsystem corresponds to blocks 405, 412, 414, 416 and 418. The second control subsystem corresponds to blocks 405 and 422. The selector corresponds to selector 430. Block 405 is shared between the first and the second control subsystems.

The second control subsystem of the embodiment of Fig. 4 comprises a PID controller 422 arranged to determine a second control signal 48-2 based on suction pressure error signal 43; preferably only the P term and the I term are used, and, in this case, controller 422 may be defined a PI controller.

The second control subsystem of the embodiment of Fig. 4 is arranged to calculate a suction pressure error signal 43 as a difference between a suction pressure setpoint 41 and a suction pressure measure signal 42 through e.g. a subtractor 405.

The first control subsystem of the embodiment of Fig. 4 is arranged to calculate a suction pressure error signal 43 as a difference between a suction pressure setpoint 41 and a suction pressure measure signal 42 through e.g. a subtractor 405, and a rotation speed error signal 47 as a difference between a rotation speed setpoint 45 and a rotation speed measure signal 46 through e.g. a subtractor 416.

The first control subsystem of the embodiment of Fig. 4 comprises a load controller 412 arranged to determine a load demand 44 based on suction pressure error signal 43; controller 412 is advantageously a PID controller.

The first control subsystem of the embodiment of Fig. 4 comprises a converter 414 arranged to determine a rotation speed setpoint 45 based on load demand 44.

Converter 414 is, in particular, a split converter and is arranged to provide alternatively a rotation speed setpoint 45 and an anti-surge control signal 93. Converter 414 may choose to provide one or the other signal depending on the compressor operative status, more in particular on the compressor operative point on the compressor envelop map (for example pressure ratio vs. suction volumetric flow rate).

The first control subsystem of the embodiment of Fig. 4 comprises a speed governor 418 arranged to determine a first control signal 48-1 based on speed error signal 47; governor 418 is advantageously a PID controller. Typically, governor 418 is aware of the maximum admissible rotation speed and/or the minimum admissible rotation speed of the engine and/or the compressor.

Selector 430 is arranged to receive first control input 48-1 and second control input 48-2, to provide a third control signal 49 to a power control input of the rotary engine. Selector 430 may carry out selection of input signals according to one or more predetermined selection criteria, for example one or more of the criteria A, B, C, D and E previously mentioned in connection to selector 230.

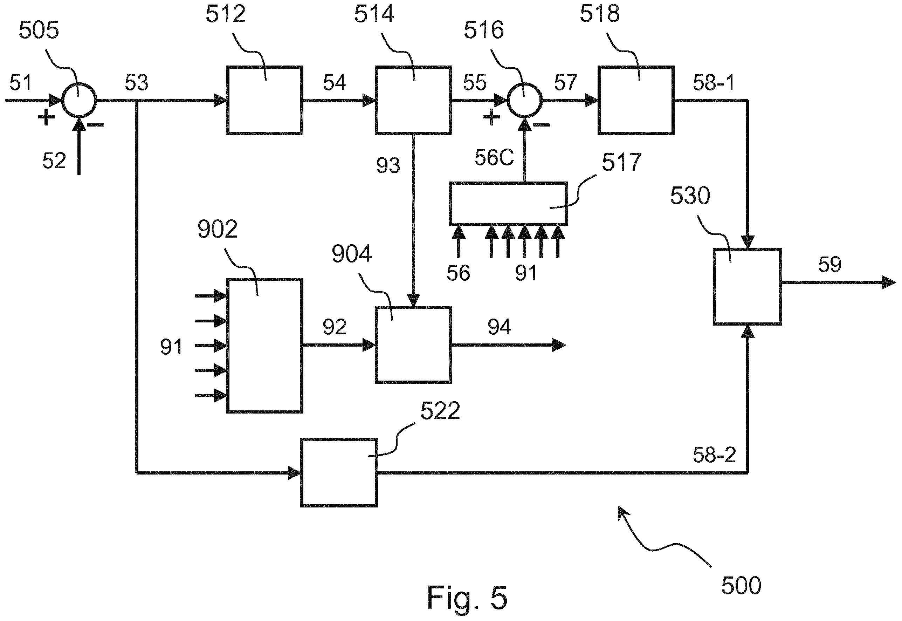

Both the embodiment 400 of Fig. 4 and the embodiment 500 of Fig. 5, that will be described later, comprise an anti-surge control subsystem.

The anti-surge control subsystem comprises a controller 902 and selector 904.

Controller 902 determines an anti-surge control signal 92 based on a set 91 of parameters; this set comprises in particular the pressure and the temperature at the inlet of the compressor, the pressure and the temperature at the outlet of the compressor, and the volumetric flow rate processed by the compressor. Such controller may determine an anti-surge control signal in a known way.

Selector 904 is arranged to receive the anti-surge control signal 92 and another anti-surge control signal 93, and to select one of them as anti-surge control signal 94 to be provide to an anti-surge valve of the compressor; control signal 94 may be a signal indicating the opening degree of the anti-surge valve, more in particular its opening percentage. Selector 904 may select, for example, the anti-surge control signal having higher value.

In the embodiment of Fig. 4, anti-surge control signal 93 is provided by split converter 414.

In the embodiment of Fig. 5, anti-surge control signal 93 is provided by split converter 514.

The embodiment 500 of Fig. 5 differs from the embodiment 400 of Fig. 4 only in that subtractor 516 determines a speed error signal 57 as a difference between a rotation speed setpoint 55 and a corrected signal 56C (instead of a measure signal); the similarity between Fig. 4 and Fig. 5 is apparent and similar reference numbers are associated to similar/identical components of the embodiments.

The corrected signal 56C derives from correcting a speed measure signal 56 that indicates the rotation speed of the rotary compressor or the rotary engine being controlled by control system 500.

Determination of signal 56C is carried out by a corrector 517.

As known, the "corrected speed" of a compressor is the speed at which the pressure ratio calculated from the compressor performance map at the actual gas flow processed by the compressor is equal to the actual pressure ratio delivered by the compressor.

The "corrected speed" is equal to the actual speed (i.e. the measured speed) if the actual condition of the gas mixture at the inlet of the compressor is equal to the design condition of the gas mixture at the inlet of the compressor.

Corrector 517 determines the corrected speed 56C based on the measured speed 56 and a set 91 of parameters; this set comprises in particular the pressure and the temperature at the inlet of the compressor, the pressure and the temperature at the outlet of the compressor, and the volumetric flow rate processed by the compressor.

It is to be noted that, in the embodiment if Fig. 5, the same set of parameters are input to block 902 and block 517.

Corrected speed 56C for a compressor is advantageously calculated as follows.

The corrected rotation speed derives from the following formula $\omega_{corr} = 2 \frac{u_{2,corr}}{D_2}$; wherein $u_{2,corr}$ is a corrected peripheral speed of the impeller of the compressor at its outlet section and $D_2$ is a geometrical parameter of the impeller (external diameter).

The corrected peripheral speed derives from the following formula $u_{2,corr} = \sqrt{\frac{H_P}{\psi}}$; wherein $H_P$ is the polytropic head and $\psi$ is the dimensionless polytropic head.

The polytropic head derives from the following formula:

$$H_P = \frac{k}{k-1} \cdot \eta \cdot z_1 \cdot R \cdot T_1 \cdot \left( r^{\frac{k-1}{k \cdot \eta}} - 1 \right);$$

wherein $\eta$ is the polytropic efficiency of the compressor, given by the compressor map as a function of the dimensionless volumetric flow $\varphi$ and the mach number $Mu$, $r$ is the actual pressure ratio of the compressor i.e. the ratio between the gas pressure at the outlet of the compressor and the gas pressure at the inlet of the compressor $\left( \frac{P_2}{P_1} \right)$, $k$ is the ratio between the specific heat capacity at constant pressure of the gas at the inlet of the compressor and the specific heat capacity at constant volume of the gas at the inlet of the compressor $\left( \frac{c_p}{c_v} \right)$, $z_1$ is the compressibility factor of the gas at the inlet of the compressor, $R$ is the specific constant of the gas processed by the compressor, and $T_1$ is the temperature of the gas at the inlet of the compressor.

The dimensionless volumetric flow derives from the following formula $\varphi = \frac{m}{\rho_1 \cdot A_C \cdot u_2 \cdot \left( \frac{D_M}{D_2} \right)}$; wherein m is the mass flow of the gas processed by the compressor, $\rho_1$ is the density of the gas at compressor's inlet conditions, $A_C$ is the gas flow area, $u_2$ is the peripheral speed of the impeller of the compressor at its outlet section (i.e. $\omega \cdot \frac{D_2}{2}$ wherein $\omega$ is the actual rotational speed of the compressor) and $D_M$ is a geometrical parameter of the compressor's impeller (impeller family diameter). It is to be noted that the above formula of the dimensionless volumetric flow contains the components of the volumetric flow Q of the gas processed by the compressor.

The mach number derives from the following formula $Mu = \frac{u_2}{c} \cdot \left( \frac{D_M}{D_2} \right)$; wherein c is the speed of sound calculated as $\sqrt{z_1 \cdot k \cdot R \cdot T_1}$.

The dimensionless polytropic head derives from the following formula $\psi = \frac{H_P}{u_2^2}$.

The specific gas constant derives from the following formula $\frac{\bar{R}}{MW}$; wherein $\bar{R}$ is the gas constant (8.314 J·K$^{-1}$·mol$^{-1}$) and $MW$ is the molecular weight of the gas processed by the compressor.

The molecular weight of the gas processed by the compressor may be estimated from compressor performance maps through the following formula:

$$MW = \frac{\frac{k}{k-1} \cdot \eta \cdot z_1 \cdot \bar{R} \cdot T_1 \cdot \left( r^{\frac{k-1}{k \cdot \eta}} - 1 \right)}{H_P}$$

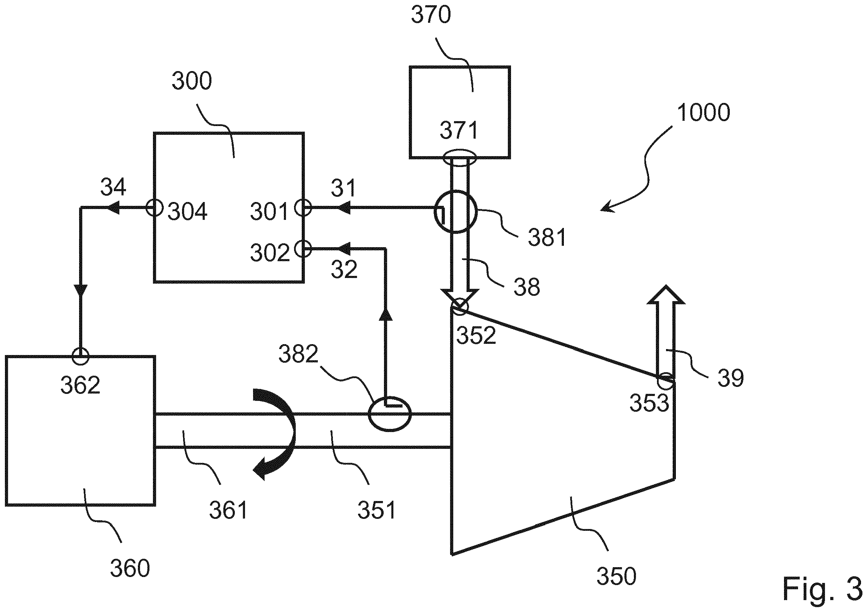

Fig. 3 shows a general block diagram applicable to several embodiments of an improved synthesis plant, in particular to an ammonia improved synthesis plant.

Plant 1000 comprises: a rotary compressor 350, a rotary engine 360 driving the rotary compressor 350, and a control system 300.

Control system 300 is of the type comprising a first control subsystem and second control subsystem as, for example, the one shown in Fig. 2.

In the embodiment of Fig. 3, the shaft 361 of rotary engine 360 is mechanically directly connected to the shaft 351 of rotary compressor 350.

Compressor 350 has an inlet 352 for receiving an uncompressed gas mixture flow 38 and an outlet 353 for providing a compressed gas mixture flow 39.

Control system 300 has a first input 301 for receiving a suction pressure measure signal 31, a second input 302 for receiving a rotation speed measure signal 32, and an output 304 for providing a power control signal 34.

Output 304 is electrically connected to an input 362 being a power control input of engine 360; typically, by varying power, also rotation speed varies; therefore, engine 360 is a variable-speed rotary engine.

There is a pressure sensor 381 that is positioned and configured to monitor to uncompressed gas mixture flow 38 and electrically connected to input 301.

There is a rotation speed sensor 382 that is positioned and configured to monitor to shaft 351 and electrically connected to input 302.

Engine 360 is advantageously a steam turbine; alternatively, it may be, for example, a gas turbine or a (variable-speed) motor such as an electric motor. The use of a steam turbine is advantageous as in a synthesis plant heat is generated and a steam turbine allows to recycle some of this generated heat for a useful purpose, i.e. rotating the compressor.

Synthesis plant 1000 may comprise one or more further compressors. For example, two compressors may be fluidly connected in series and may be controlled by the same control system 300 through the same control signal or through the same measure signals.

Upstream compressor 350 there is a unit 370, for example a reformer (in particular a condensation reformer). In the embodiment of Fig. 3, an outlet 371 of unit 370 is fluidly and directly connected to inlet 352 of compressor 350.

It is to be noted that, due to the presence of unit 370, gas mixture 38 may sometimes vary its composition. This is particular the case if unit 370 is a condensation reformer.

Synthesis plant 1000 is advantageously a plant for producing ammonia. If the synthesis plant 1000 were licensed to perform the KBR ammonia process, then a purifier arrangement including a condensation reformer is typically placed upstream the synthesis gas compressor arrangement. Although the purifier arrangement would be configured to maintain the composition of the output gas mixture constant, it could do so only to a certain extent and not at all times for any operating condition of the plant, unless the synthesis plant 1000 was built or upgraded to include an embodiment of the new two-subsystem control system described, shown and claimed herein.

It is to be noted that compression of so-called "syngas" may be used in several synthesis processes, for example in order to synthetize ammonia, methanol, etc.

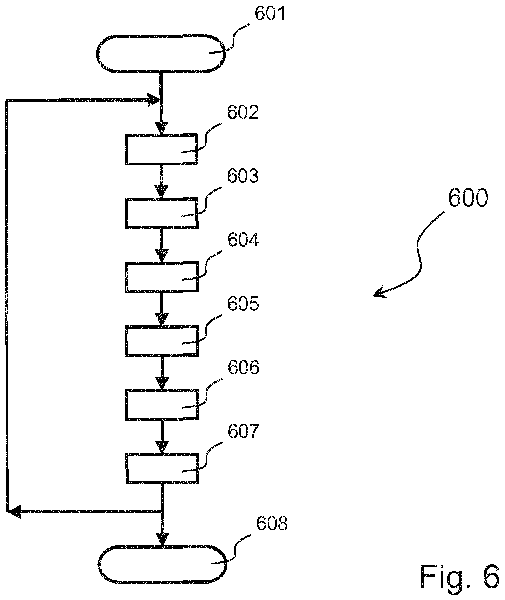

Fig. 6 shows a flow chart 600 of an embodiment of a method of controlling a rotary compressor, such as for example compressor 350 in Fig. 3, driven by a rotary engine, such as for example steam turbine 360 in Fig. 3.

Block 601 corresponds to the start of a control process.

Block 608 corresponds to the end of the control process.

The activities corresponding to blocks from 602 to 607 are cyclically repeated.

Block 602 corresponds to measuring a parameter of the rotary compressor indicating performance of the rotary compressor; in embodiment of Fig. 3 for example, sensor 381 measures a suction pressure of compressor 350.

Block 603 corresponds to measuring a rotation speed of the rotary compressor or the rotary engine; in embodiment of Fig. 3 for example, sensor 382 measures a rotation speed of a single shaft that is both a shaft 361 of steam turbine 360 and a shaft 351 of compressor 350.

Block 604 corresponds to generating a first control signal as a function of the performance parameter and the rotation speed; in embodiment of Fig.3 for example, this activity is carried out by control system 300 internally thereto (see for example Fig. 2).

Block 605 corresponds to generating a second control signal as a function of the performance parameter; in embodiment of Fig.3 for example, this activity is carried out by control system 300 internally thereto (see for example Fig. 2).

Block 606 corresponds to generating a third control signal by selecting between the first control signal and the second control signal; in embodiment of Fig.3 for example, this activity is carried out by control system 300 internally thereto (see for example Fig. 2).

Block 607 corresponds to providing the third control signal to control input terminals of the rotary engine; in embodiment of Fig.3 for example, this activity corresponds to electrically connecting output terminals 304 of control system 300 to control terminals 362 of steam turbine 360.

As explained previously, the second control signal may be selected based on one or more of at least the following criteria:

- an absolute value of a difference between said first measure signal and a performance setpoint exceeds a first threshold value,

- an absolute value of a derivative of a difference between said first measure signal and a performance setpoint exceeds a second threshold value.

Other advantageous functionalities of the novel and inventive control method correspond to advantageous components of the novel and inventive control system.

**Claims**

1. A control system (200) for a rotary compressor driven by a rotary engine, said control system (200) comprising:

A) a first control subsystem (210) comprising:

- a performance input (211) arranged to receive a first measure signal (21) indicating performance of said rotary compressor,
- a speed input (213) arranged to receive a second measure signal (23) indicating rotation speed of said rotary compressor or said rotary engine, and
- a first control output (212) arranged to provide a first control signal (26) as a function of said first measure signal (21) and said second measure signal (23);

B) a second control subsystem (220) comprising:

- a performance input (221) arranged to receive a third measure signal (22) indicating performance of said rotary compressor, and
- a second control output (222) arranged to provide a second control signal (27) as a function of said third measure signal (22);

**characterised in that** said control system (200) further comprises:
C) a selector (230) comprising:

- a first input (231) electrically connected to said first control output (212),
- a second input (232) electrically connected to said second control output (222), and
- a third control output (234) arranged to provide a third control signal (24) to a power control input of said rotary engine,

wherein said selector (230) is arranged to select said first control signal (26) or said second control signal (27) as said third control signal (24) to be provided at said third control output (234).

2. The control system (200) of claim 1, wherein said selector (230) is arranged to select said second control signal (27) based on one or more of at least the following criteria:

A) an absolute value of a difference between said first measure signal (21) and a performance setpoint exceeds a first threshold value,
B) an absolute value of a derivative of a difference between said first measure signal (21) and a performance setpoint exceeds a second threshold value.

3. The control system (400, 500) of claim 1 or 2, wherein said second control subsystem comprises a PID controller (422, 522), wherein preferably only the P term and the I term are used.

4. The control system (400, 500) of claim 1 or 2 or 3, wherein said second control subsystem is arranged to calculate a performance error signal (43, 53) as a difference between a performance setpoint (41, 51) and said third measure signal (42, 52).

5. The control system (400) of any preceding claim from 1 to 4, wherein said first control subsystem is arranged to calculate a performance error signal (43) as a difference between a performance setpoint (41) and said first measure signal (42), and a speed error signal (47) as a difference between a speed setpoint (45) and said second measure signal (46).

6. The control system (500) of any preceding claim from 1 to 5, wherein said first control subsystem is arranged to calculate a performance error signal (53) as a difference between a performance setpoint (51) and said first measure signal (52), and a speed error signal (57) as a difference a speed setpoint (55) and between a corrected signal (56C), wherein said corrected signal (56C) derives from correcting said second measure signal (56).

7. The control system (400, 500) of any preceding claim, wherein said first control subsystem comprises a load controller (412, 512) arranged to determine a load demand (44, 54) based on said performance error signal (43, 53).

8. The control system (400, 500) of any preceding claim, wherein said first control subsystem comprises a converter (414, 514) arranged to determine a speed setpoint (45, 55) based on said load demand (44, 54).

9. The control system (400, 500) of any preceding claim, wherein said converter (414, 514) is a split converter and is arranged to provide alternatively a speed setpoint (45, 55) and an anti-surge control signal (93).

10. The control system (400, 500) of any preceding claim, wherein said first control subsystem comprises a speed governor (418, 518) arranged to determine said first control signal (48-1, 58-1) based on said speed error signal (47, 57).

11. The control system (400, 500) of any of the preceding claims, wherein said performance input (211, 221) of said first and/or second subsystem (210, 220) is arranged to receive a measure signal (21, 22) indicating suction pressure of said rotary compressor.

12. A synthesis plant (1000) comprising:

- a rotary compressor (350) comprising an inlet (352) and an outlet (353), wherein said inlet (352) is arranged to receive a gas mixture (38);
- a rotary engine (360) driving said rotary compressor (350); and
- a control system (300) according to any of the preceding claims.

13. The plant (1000) of claim 12, wherein said rotary engine (360) is a steam turbine.

14. The plant (1000) of claim 12 or 13, comprising a reformer (370) upstream said rotary compressor (350), wherein said reformer (370) comprises an outlet (371) fluidly connected to said inlet (352) of said rotary compressor (350).

15. A method (600) of controlling a rotary compressor driven by a rotary engine, comprising the steps of:

A) measuring (602) a parameter of said rotary compressor, said parameter indicating performance of said rotary compressor,
B) measuring (603) a rotation speed of said rotary compressor or said rotary engine,
C) generating (604) a first control signal as a function of said parameter and said rotation speed,
D) generating (605) a second control signal as a function of said parameter,
**characterised in that** said method (600) further comprises the steps of:
E) generating (606) a third control signal by selecting between said first control signal and said second control signal, and
F) providing (607) said third control signal to control input terminals of said rotary engine.

**Patentansprüche**

1. Steuerungssystem (200) für einen Rotationsverdichter, der durch eine Rotationsmaschine angetrieben wird, wobei das Steuerungssystem (200) umfasst:

A) ein erstes Steuerungssubsystem (210), umfassend:

einen Leistungseingang (211), der zum Empfangen eines ersten Messsignals (21), das die Leistung des Rotationsverdichters angibt, angeordnet ist,
einen Drehzahleingang (213), der zum Empfangen eines zweiten Messsignals (23), das die Drehzahl des Rotationsverdichters oder der Rotationsmaschine angibt, angeordnet ist, und
einen ersten Steuerungsausgang (212), der dazu angeordnet ist, ein erstes Steuersignal (26) in Abhängigkeit von dem ersten Messsignal (21) und dem zweiten Messsignal (23) bereitzustellen;

B) ein zweites Steuerungssubsystem (220), umfassend:

einen Leistungseingang (221), der zum Empfangen eines dritten Messsignals (22), das die Leistung des Rotationsverdichters angibt, angeordnet ist, und
einen zweiten Steuerungsausgang (222), der dazu angeordnet ist, ein zweites Steuersignal (27) in Abhängigkeit von dem dritten Messsignal (22) bereitzustellen;
**dadurch gekennzeichnet, dass** das Steuerungssystem (200) ferner umfasst:

C) einen Selektor (230), umfassend:

einen ersten Eingang (231), der mit dem ersten Steuerungsausgang (212) elektrisch verbunden ist,
einen zweiten Eingang (232), der mit dem zweiten Steuerungsausgang (222) elektrisch verbunden ist, und
einen dritten Steuerungsausgang (234), der dazu angeordnet ist, ein drittes Steuersignal (24) an einen Leistungssteuerungseingang der Rotationsmaschine bereitzustellen,
wobei der Selektor (230) dazu angeordnet ist, das erste Steuersignal (26) oder das zweite Steuersignal (27) als das dritte Steuersignal (24) auszuwählen, das an dem dritten Steuerungsausgang (234) bereitzustellen ist.

2. Steuerungssystem (200) nach Anspruch 1, wobei der Selektor (230) dazu angeordnet ist, das zweite Steuersignal (27) basierend auf mindestens einem der folgenden Kriterien auszuwählen:

A) einem Absolutwert einer Differenz zwischen dem ersten Messsignal (21) und einem Leistungssollwert, der einen ersten Schwellenwert überschreitet,
B) einem Absolutwert einer Ableitung einer Differenz zwischen dem ersten Messsignal (21) und einem Leistungssollwert, der einen zweiten Schwellenwert überschreitet.

3. Steuerungssystem (400, 500) nach Anspruch 1 oder 2, wobei das zweite Steuerungssubsystem eine PID-Steuereinrichtung (422, 522) umfasst, wobei vorzugsweise nur der P-Term und der I-Term verwendet werden.

**4.** Steuerungssystem (400, 500) nach einem der Ansprüche 1 oder 2 oder 3, wobei das zweite Steuerungssubsystem angeordnet ist zum Berechnen eines Leistungsfehlersignals (43, 53) als eine Differenz zwischen einem Leistungssollwert (41, 51) und dem dritten Messsignal (42, 52).

**5.** Steuerungssystem (400) nach einem der vorstehenden Ansprüche von 1 bis 4, wobei das erste Steuerungssubsystem angeordnet ist zum Berechnen eines Leistungsfehlersignals (43) als eine Differenz zwischen einem Leistungssollwert (41) und dem ersten Messsignal (42), und eines Drehzahlfehlersignals (47) als eine Differenz zwischen einem Drehzahlsollwert (45) und dem zweiten Messsignal (46).

**6.** Steuerungssystem (500) nach einem der vorstehenden Ansprüche von 1 bis 5, wobei das erste Steuerungssubsystem angeordnet ist zum Berechnen eines Leistungsfehlersignals (53) als eine Differenz zwischen einem Leistungssollwert (51) und dem ersten Messsignal (52), und eines Drehzahlfehlersignals (57) als eine Differenz zwischen einem Drehzahlsollwert (55) und einem korrigierten Signal (56C), wobei das korrigierte Signal (56C) sich aus der Korrektur des zweiten Messsignals (56) ergibt.

**7.** Steuerungssystem (400, 500) nach einem der vorstehenden Ansprüche, wobei das erste Steuerungssubsystem eine Laststeuerung (412, 512) umfasst, die dazu angeordnet ist, eine Lastanforderung (44, 54) basierend auf dem Leistungsfehlersignal (43, 53) zu bestimmen.

**8.** Steuerungssystem (400, 500) nach einem der vorstehenden Ansprüche, wobei das erste Steuerungssubsystem einen Wandler (414, 514) umfasst, der dazu angeordnet ist, einen Drehzahlsollwert (45, 55) basierend auf der Lastanforderung (44, 54) zu bestimmen.

**9.** Steuerungssystem (400, 500) nach einem der vorstehenden Ansprüche, wobei der Wandler (414, 514) ein Split-Konverter (geteilter Wandler) ist und dazu angeordnet ist, alternativ einen Drehzahlsollwert (45, 55) und ein Überspannungsschutz-Steuersignal (93) bereitzustellen.

**10.** Steuerungssystem (400, 500) nach einem der vorstehenden Ansprüche, wobei das erste Steuerungssubsystem einen Drehzahlregler (418, 518) umfasst, der dazu angeordnet ist, das erste Steuersignal (48-1, 58-1) basierend auf dem Drehzahlfehlersignal (47, 57) zu bestimmen.

**11.** Steuerungssystem (400, 500) nach einem der vorstehenden Ansprüche, wobei der Leistungseingang (211, 221) des ersten und/oder des zweiten Subsystems (210, 220) dazu angeordnet ist, ein Messsignal (21, 22) zu empfangen, das den Ansaugdruck des Rotationsverdichters angibt.

**12.** Syntheseanlage (1000), umfassend:

einen Rotationsverdichter (350), umfassend einen Einlass (352) und einen Auslass (353), wobei der Einlass (352) dazu angeordnet ist, ein Gasgemisch (38) aufzunehmen;
eine Rotationsmaschine (360), die den Rotationsverdichter (350) antreibt; und
ein Steuerungssystem (300) nach einem der vorstehenden Ansprüche.

**13.** Anlage (1000) nach Anspruch 12, wobei die Rotationsmaschine (360) eine Dampfturbine ist.

**14.** Anlage (1000) nach Anspruch 12 oder 13, umfassend einen dem Rotationsverdichter (350) vorgelagerten Reformer (370), wobei der Reformer (370) einen Auslass (371) umfasst, der fluidisch mit dem Einlass (352) des Rotationsverdichters (350) verbunden ist.

**15.** Verfahren (600) zum Steuern eines Rotationsverdichters, der durch eine Rotationsmaschine angetrieben wird, umfassend die folgenden Schritte:

A) Messen (602) eines Parameters des Rotationsverdichters, wobei der Parameter die Leistung des Rotationsverdichters angibt,
B) Messen (603) einer Drehzahl des Rotationsverdichters oder der Rotationsmaschine,
C) Generieren (604) eines ersten Steuersignals in Abhängigkeit von dem Parameter und der Drehzahl,
D) Generieren (605) eines zweiten Steuersignals in Abhängigkeit von dem Parameter,
**dadurch gekennzeichnet, dass** das Verfahren (600) ferner folgende Schritte umfasst:
E) Generieren (606) eines dritten Steuersignals durch Auswählen zwischen dem ersten Steuersignal und dem zweiten Steuersignal, und
F) Bereitstellen (607) des dritten Steuersignals an Steuereingangsanschlüsse der Rotationsmaschine.

**Revendications**

**1.** Système de commande (200) pour un compresseur rotatif entraîné par un moteur rotatif, ledit système de commande (200) comprenant :

A) un premier sous-système de commande (210) comprenant :

- une entrée de performance (211) agencée pour recevoir un premier signal de mesure (21) indiquant une performance dudit compresseur rotatif,
- une entrée de vitesse (213) agencée pour recevoir un deuxième signal de mesure (23) indiquant une vitesse de rotation dudit compresseur rotatif ou dudit moteur rotatif, et
- une première sortie de commande (212) agencée pour fournir un premier signal de commande (26) en fonction dudit premier signal de mesure (21) et dudit deuxième signal de mesure (23) ;

B) un deuxième sous-système de commande (220) comprenant :

- une entrée de performance (221) agencée pour recevoir un troisième signal de mesure (22) indiquant une performance dudit compresseur rotatif, et
- une deuxième sortie de commande (222) agencée pour fournir un deuxième signal de commande (27) en fonction dudit troisième signal de mesure (22) ;

**caractérisé en ce que** ledit système de commande (200) comprend en outre :
C) un sélecteur (230) comprenant :

- une première entrée (231) connectée électriquement à ladite première sortie de commande (212),
- une seconde entrée (232) connectée électriquement à ladite deuxième sortie de commande (222), et
- une troisième sortie de commande (234) agencée pour fournir un troisième signal de commande (24) à une entrée de commande de puissance dudit moteur rotatif,

dans lequel ledit sélecteur (230) est agencé pour sélectionner ledit premier signal de commande (26) ou ledit deuxième signal de commande (27) comme ledit troisième signal de commande (24) à fournir à ladite troisième sortie de commande (234).

2. Système de commande (200) selon la revendication 1, dans lequel ledit sélecteur (230) est agencé pour sélectionner ledit deuxième signal de commande (27) sur la base d'un ou de plusieurs d'au moins les critères suivants :

A) une valeur absolue d'une différence entre ledit premier signal de mesure (21) et un point de consigne de performance dépasse une première valeur de seuil,
B) une valeur absolue d'une dérivée d'une différence entre ledit premier signal de mesure (21) et un point de consigne de performance dépasse une deuxième valeur de seuil.

3. Système de commande (400, 500) selon la revendication 1 ou 2, dans lequel ledit deuxième sous-système de commande comprend un contrôleur PID (422, 522), dans lequel de préférence seuls le terme P et le terme I sont utilisés.

4. Système de commande (400, 500) selon la revendication 1 ou 2 ou 3, dans lequel ledit deuxième sous-système de commande est agencé pour calculer un signal d'erreur de performance (43, 53) comme une différence entre un point de consigne de performance (41, 51) et ledit troisième signal de mesure (42, 52).

5. Système de commande (400) selon une quelconque revendication précédente de 1 à 4, dans lequel ledit premier sous-système de commande est agencé pour calculer un signal d'erreur de performance (43) comme une différence entre un point de consigne de performance (41) et ledit premier signal de mesure (42), et un signal d'erreur de vitesse (47) comme une différence entre un point de consigne de vitesse (45) et ledit deuxième signal de mesure (46).

6. Système de commande (500) selon une quelconque revendication précédente de 1 à 5, dans lequel ledit premier sous-système de commande est agencé pour calculer un signal d'erreur de performance (53) comme une différence entre un point de consigne de performance (51) et ledit premier signal de mesure (52), et un signal d'erreur de vitesse (57) comme une différence d'un point de consigne de vitesse (55) et entre un signal corrigé (56C), dans lequel ledit signal corrigé (56C) dérive de la correction dudit deuxième signal de mesure (56).

7. Système de commande (400, 500) selon une quelconque revendication précédente, dans lequel ledit premier sous-système de commande comprend un contrôleur de charge (412, 512) agencé pour déterminer une demande de charge (44, 54) sur la base dudit signal d'erreur de performance (43, 53).

8. Système de commande (400, 500) selon une quelconque revendication précédente, dans lequel ledit premier sous-système de commande comprend un convertisseur (414, 514) agencé pour déterminer un point de consigne de vitesse (45, 55) sur la base de ladite demande de charge (44, 54).

9. Système de commande (400, 500) selon une quelconque revendication précédente, dans lequel ledit convertisseur (414, 514) est un convertisseur divisé et est agencé pour fournir alternativement un point de consigne de vitesse (45, 55) et un signal de commande anti-surtension (93).

10. Système de commande (400, 500) selon une quelconque revendication précédente, dans lequel ledit premier sous-système de commande comprend un régulateur de vitesse (418, 518) agencé pour déterminer ledit premier signal de commande (48-1, 58-1) sur la base dudit signal d'erreur de vitesse (47, 57).

11. Système de commande (400, 500) selon l'une quelconque des revendications précédentes, dans lequel ladite entrée de performance (211, 221) dudit premier et/ou deuxième sous-système (210, 220) est agencée pour recevoir un signal de mesure (21, 22) indiquant une pression d'aspiration dudit compresseur rotatif.

12. Installation de synthèse (1000) comprenant :

    - un compresseur rotatif (350) comprenant une entrée (352) et une sortie (353), dans laquelle ladite entrée (352) est agencée pour recevoir un mélange gazeux (38) ;
    - un moteur rotatif (360) entraînant ledit compresseur rotatif (350) ; et
    - un système de commande (300) selon l'une quelconque des revendications précédentes.

13. Installation (1000) selon la revendication 12, dans laquelle ledit moteur rotatif (360) est une turbine à vapeur.

14. Installation (1000) selon la revendication 12 ou 13, comprenant un reformeur (370) en amont dudit compresseur rotatif (350), dans laquelle ledit reformeur (370) comprend une sortie (371) reliée fluidiquement à ladite entrée (352) dudit compresseur rotatif (350).

15. Procédé (600) de commande d'un compresseur rotatif entraîné par un moteur rotatif, comprenant les étapes consistant à :

    A) mesurer (602) un paramètre dudit compresseur rotatif, ledit paramètre indiquant une performance dudit compresseur rotatif,
    B) mesurer (603) une vitesse de rotation dudit compresseur rotatif ou dudit moteur rotatif,
    C) générer (604) un premier signal de commande en fonction dudit paramètre et de ladite vitesse de rotation,
    D) générer (605) un deuxième signal de commande en fonction dudit paramètre,
    **caractérisé en ce que** ledit procédé (600) comprend en outre les étapes consistant à :
    E) générer (606) un troisième signal de commande en sélectionnant entre ledit premier signal de commande et ledit deuxième signal de commande, et
F) fournir (607) ledit troisième signal de commande à des bornes d'entrée dudit moteur rotatif.

Fig. 1 - Prior Art

EP 3 454 163 B1

Fig. 2

EP 3 454 163 B1

14

Fig. 3

Fig. 4

Fig. 5

Fig. 6

**EP 3 454 163 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3979655 A